(19) Europäisches Patentamt / European Patent Office / Office européen des brevets

(11) **EP 2 134 135 A2**

(12) **EUROPEAN PATENT APPLICATION**

(43) Date of publication:
**16.12.2009 Bulletin 2009/51**

(51) Int Cl.:
***H04W 72/14*** (2009.01)

(21) Application number: **09156117.5**

(22) Date of filing: **25.03.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **09.06.2008 JP 2008150798**

(71) Applicant: **Fujitsu Limited**
**Kawasaki-shi, Kanagawa 211-8588 (JP)**

(72) Inventor: **Ono, Yoshiyuki**
**Kawasaki-shi, Kanagawa 211-8588 (JP)**

(74) Representative: **Stebbing, Timothy Charles**
**Haseltine Lake LLP**
**Lincoln House, 5th Floor**
**300 High Holborn**
**London WC1V 7JH (GB)**

(54) **Transmission period control method of radio resource allocation request**

(57) In an LTE-type wireless communication system, the transmission period of a scheduling request SR is adaptively controlled to be optimal for each user terminal, so that useless SR transmission is reduced. For the controlling, a base station (eNodeB) modifies a transmission period of a radio resource allocation request in an adaptive manner during communication based on communication quality with a user terminal (UE); and notifies the user terminal of the modified transmission period of the radio resource allocation request; and the user terminal transmits the radio resource allocation request requesting the radio resource to the base station at the notified transmission period.

FIG. 4

**Description**

The present invention relates to a method for controlling the transmission period of a radio resource allocation request.

In a mobile communication system, such as one employing 3GPP LTE (Long Term Evolution) currently under discussion, a control channel (L1/L2 Control Channel) is set between a user terminal UE and a base station (eNB: eNodeB) to perform signaling and notify quality information (CQI: Channel Quality Indicator).

As one aspect of the use of such a control channel, in order to request the base station eNB to allocate some band (resource) to the user, the user terminal UE issues a scheduling request SR through an uplink control channel (UL L1/L2 Control Channel = PUCCH).

The transmission period of the scheduling request SR from the user terminal UE and the reception timing are predetermined between the base station eNB and the user terminal UE. On reaching the above predetermined period, the user terminal UE transmits the scheduling request SR to the base station eNB in case the user terminal UE retains data for transmission.

Even when reaching the transmission period of the scheduling request SR, if the user terminal UE retains no data for transmission at that time point, the user terminal UE does not transmit any scheduling request SR.

On the other hand, on the base station eNB side, the scheduling request SR is received through a particular control channel (UL L1/L2 Control Channel), in synchronization with the timing of the predetermined transmission period of the scheduling request SR from the user terminal UE.

If the user terminal UE has already transmitted the scheduling request SR, the base station eNB receives the above scheduling request SR, and issues a scheduling grant SG to notify the user terminal UE of an uplink radio resource allocation.

On receiving the scheduling grant SG issued by the base station eNB, the user terminal UE transmits data to the base station eNB, using a radio resource being allocated on the basis of radio resource allocation information included in the above scheduling grant SG.

Now, the following describes a technique in regard to scheduling between the base station eNB and the user terminal UE in 3GPP LTE (Long Term Evolution) having been proposed in the standardization project for the third-generation (3G) mobile communication system.

There is a document pertinent to the related art, 3GPP R2-073209, "Scheduling request triggering criterions for LTE" August 20th-24th, 2007.

According to 3GPP LTE, in orthogonal frequency division multiple access (OFDMA), radio frequency bands are separated in the frequency direction, and each separated frequency is allocated to a different user terminal UE and used. Further, time division multiplexing among user terminals UE is achieved in that the base station eNB modifies the frequency allocation to the user terminal UE on a subframe-by-subframe basis (subframe:1ms).

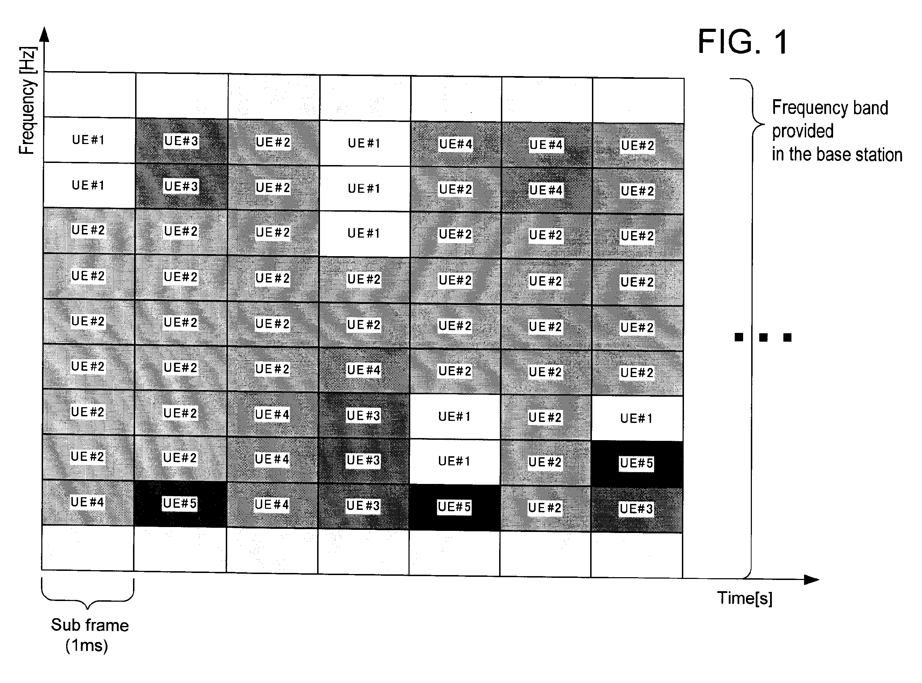

FIG. 1 shows the way that the base station eNB allocates radio resources to each user terminal UE. In FIG. 1, a box (range) sectioned by each frequency range in the vertical axis direction and each time slot in the horizontal axis direction is a minimum radio resource unit to be allocated to the user terminal UE.

To each of a plurality of user terminals UE, the base station eNB allocates each frequency range and time available for communication. Data are transmitted and received between the user terminal UE and the base station eNB in the frequency band and time that are determined by the base station eNB.

At this time, the base station eNB allocates a larger amount of frequency band and time (i.e. more radio resources) to a user terminal UE having larger communication capacity and better communication quality (which signifies a user terminal UE having excellence in measured channel quality because of non-movement, good radio wave condition, etc.). To other users, the base station eNB allocates a smaller frequency band and time (i.e. less radio resources).

In the example shown in FIG. 1, a largest amount of radio resources are allocated to a user terminal UE #2. In contrast, a smallest amount of radio resources are allocated to a user terminal UE #5. The above example signifies that the user terminal UE #2 has good channel quality, or a large data amount for transmission with high speed, while the user terminal UE #5 has low communication speed or bad channel quality.

Such radio resources are allocated by the base station eNB after the channel quality state of each user terminal UE, a data amount accumulated in a data transmission buffer, etc. are judged in a comprehensive manner.

The above radio resource allocation is entirely performed by the base station eNB with a trigger of a radio resource allocation request from the user terminal UE side using a scheduling request SR. The base station eNB allocates a radio resource after deciding whether the radio resource requested from the user terminal UE can be allocated, taking quality information from the user terminal UE concerned into consideration.

At the time of data transmission, the user terminal UE issues the scheduling request SR to the base station eNB, taking into consideration a data amount stored in the data transmission buffer and communication quality between with the base station eNB. In response thereto, the base station eNB allocates the radio resource based on the scheduling request SR received from the user terminal UE, and transmits a scheduling grant SG to the user terminal UE.

By analyzing the scheduling grant SG, the user terminal UE comes to know the radio resource allocated to itself. Then, using the allocated radio resource, the user terminal UE performs data transmission and reception between with the base station eNB. By the repetition of such processing, data transmission and reception are carried out between the user terminal UE and the base station eNB.

To communicate by the above processing, the user terminal UE has to be in a state capable of transmitting the scheduling request SR at any time. Therefore, as to the radio resource for transmitting the scheduling request SR, the base station eNB grants the user terminal UE a certain frequency at a certain period.

In the diagram of FIG. 1, illustrating a scheme to allocate radio resources, a frequency portion having no description of any user terminal UE number indicates radio resources fixedly allocated for the transmission of the scheduling request SR.

As such, using the fixedly allocated radio resources, the transmission of not only the scheduling request SR but also RGBS [data accumulation ratio in the transmission buffer of the user terminal UE (i.e. a ratio of data presently accumulated in the transmission buffer to the transmission buffer capacity of the user terminal UE)], DL CQI [quality information of DL (downlink) data from the base station eNB to the user terminal UE that is measured on the user terminal UE side], UPH [UL Power Headroom: power used for current transmission relative to the maximum transmission power provided in the user terminal UE (i.e. transmission power margin in the user terminal UE)] is carried out from the user terminal UE.

Here, the user terminal UE normally transmits quality information CQI (Channel Quality Indicator) to the base station eNB. On the base station eNB side, the quality of the user terminal UE is grasped, and control is performed to secure communication quality.

On the other hand, when any data for transmission exists in the user terminal UE, the user terminal UE transmits the scheduling request SR on each occasion, thereby requesting the base station eNB to allocate a radio resource for data transmission.

At this time, the user terminal UE transmits the scheduling request SR using a portion of the radio resource for transmitting CQI in the UL L1/L2 control channel. Therefore, the CQI information for transmission is reduced. On the base station eNB side, a resource of the UL L1/L2 control channel to receive the above scheduling request SR is allocated periodically at regular intervals, according to a predetermined period.

Therefore, even when there is no issuance of a scheduling request SR from the user terminal UE, the base station eNB side listens for scheduling requests, continuously consuming a portion of the radio resources set aside to receive CQI.

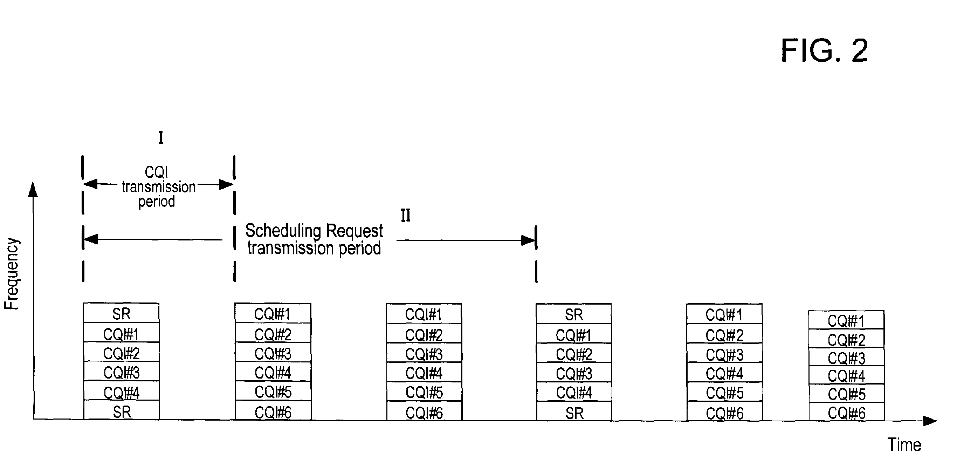

FIG. 2 is a diagram illustrating the radio resource allocation for UL L1/L2 control channel. The vertical axis represents frequency and the horizontal axis represents time. A fixed CQI transmission period I is set. According to the above fixed period I, each user terminal UE transmits CQI using the allocated radio resource (frequency).

On the other hand, a fixed period II for transmitting the scheduling request SR is also set. Therefore, at the timing of the period II, the above period II overlaps with the CQI transmission period I. By this, the radio resource for transmitting CQI is partly consumed by the transmission of the scheduling request SR.

As described above, the period II for the transmission of scheduling requests SR from the user terminals UE is fixed securely. Therefore, securing the resource for the transmission of scheduling requests SR reduces the amount of the CQI information able to be transmitted from the user terminals UE. As a result, on the base station eNB side, the resolution of quality control in regard to the user terminal UE is deteriorated. Also, the communication quality between the user terminal UE and the base station eNB is deteriorated.

Further, the transmission of the scheduling request SR causes interference to other user terminals UE. In this point, useless transmission of the scheduling request SR leads to deterioration of communication quality and reduction of maximum number of connections in the base station eNB to the user terminals UE.

However, to obtain improved communication quality, if the transmission period II of the scheduling request SR is uniformly extended, then, there is produced an increased delay time in the transmission of the scheduling request SR from the user terminal UE, when the user terminal UE retains data for transmission. This produces an increase of delay time in data transmission. Also, an increased data retention time in the transmission buffer of the user terminal UE brings about a risk of an increased data discard frequency due to a buffer full state.

Meanwhile, expansion of the transmission buffer in the user terminal UE brings about cost increase. Also, even if the transmission buffer is expanded, degradation of data communication speed may occur when data communication speed is high, resulting from the aforementioned buffer full state, an increased data accumulation time in the buffer, data discard and an increased delay time.

Embodiments of the present invention may provide a method for controlling the transmission period of a radio resource allocation notification, so as to reduce useless SR transmission by adaptively controlling the transmission period of the scheduling request SR to be optimal for each user terminal UE, by utilizing the difference of data transmission period in each user terminal UE due to different propagation environment, communication quality and data transmission speed.

An embodiment of the present invention may improve control on the base station eNB side by maximally securing resources for CQI information transmission from the user terminal UE to the base station eNB, and to increase communication quality between the user terminal UE and the base station eNB by reducing interference caused by useless transmission of the scheduling request SR.

In a mobile communication system, a transmission period control method of a radio resource allocation request requesting a radio resource from a user terminal to a base station, includes: in the base station, modifying a transmission period of the radio resource allocation request in an adaptive manner during communication based on communication quality between the base station and the user terminal, notifying the user terminal of the modified transmission period of the radio resource allocation request, and in the user terminal, transmitting the radio resource allocation request requesting the radio resource to the base station at the notified transmission period.

The information of the aforementioned communication quality to be used includes "frequency offset estimation result", "SIR (Signal to Interference Ratio) value", "CQI value", "BIR (Bit Error Rate)", "BLER (Block Error Rate)", and "retransmission count at H-ARQ (Hybrid-ARQ Acknowledgement)".

In addition to the above-mentioned quality information, a method using "Average Data Rate", a method using "Target Data Rate", and a method using the decision result of CQI reliability, which are measured in regard to the user terminal UE on the base station eNB side, are also provided.

In the method of controlling the transmission period of the scheduling request SR using the above-mentioned quality information, the user terminal UE and the base station eNB respectively refer to a table in which communication quality information and SR transmission periods are described. By this, using a SR transmission period modification method without addition of special signaling between the user terminal UE and the base station eNB, or a signaling method between the user terminal UE and the base station eNB, the transmission period of the scheduling request SR is modified.

According to another aspect of the present invention, there is provided a base station in a mobile communication system, comprising:

a control information reception unit for receiving a radio resource allocation request requesting a radio resource from a user terminal to the base station;
a transmission period controller for controlling a radio resource allocation request from the user terminal; and
a means for analyzing communication quality with the user terminal,

wherein the transmission period controller of the radio resource allocation request is arranged to modify a transmission period of the radio resource allocation request in an adaptive manner based on the communication quality of the user terminal analyzed by the communication quality analysis means, and further includes a means for notifying the user terminal of the modified transmission period of the radio resource allocation request, as control information.

According to a further aspect of the present invention, there is provided software for causing wireless transceiver equipment to act as the above base station. Such software may be stored on a computer-readable medium.

The features and advantages of the invention will be realized and attained by means of the elements and combinations particularly pointed out in the claims.

It is to be understood that both the foregoing general description and the following detailed description are exemplary and explanatory and are not restrictive of the invention, as claimed.

Reference is made, by way of example only, to the accompanying drawings in which:

FIG. 1 shows a way in which the base station eNB allocates radio resources to each user terminal UE;
FIG. 2 is a diagram illustrating the radio resource allocation for UL L1/L2 control channel;
FIG. 3 is a block diagram of an exemplary configuration of a user terminal UE;
FIG. 4 is a block diagram of a first exemplary configuration of a base station eNB;
FIG. 5 is a correspondence list between the quality information and the transmission periods of the scheduling request SR;
FIG. 6 is a block diagram of an exemplary configuration of the base station according to a second embodiment;
FIG. 7 is an exemplary configuration of the base station according to a third embodiment;
FIG. 8 is an exemplary configuration of the base station according to a fourth embodiment;
FIG. 9 is an exemplary configuration of the base station according to a fifth embodiment;
FIG. 10 is an exemplary configuration of the base station according to a sixth embodiment;
FIG. 11 shows a sequence diagram illustrating an embodiment of modifying the SR transmission period in synchronization between the base station eNB and the user terminal UE; and
FIG. 12 is a sequence diagram illustrating an embodiment that the base station eNB and the user terminal UE switch the SR transmission period by signaling.

Embodiments will be now explained according to the attached drawings as follow.

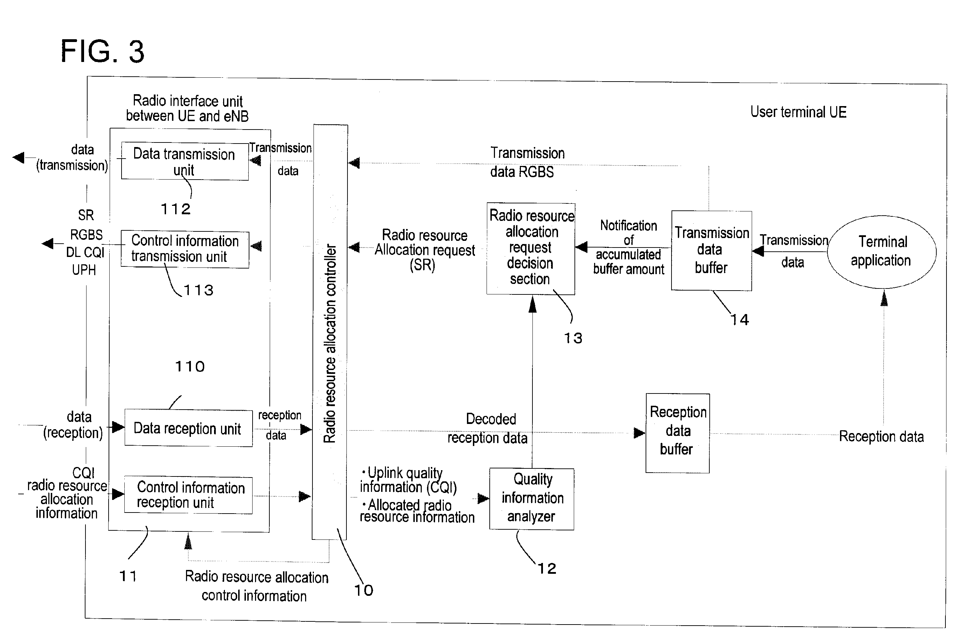

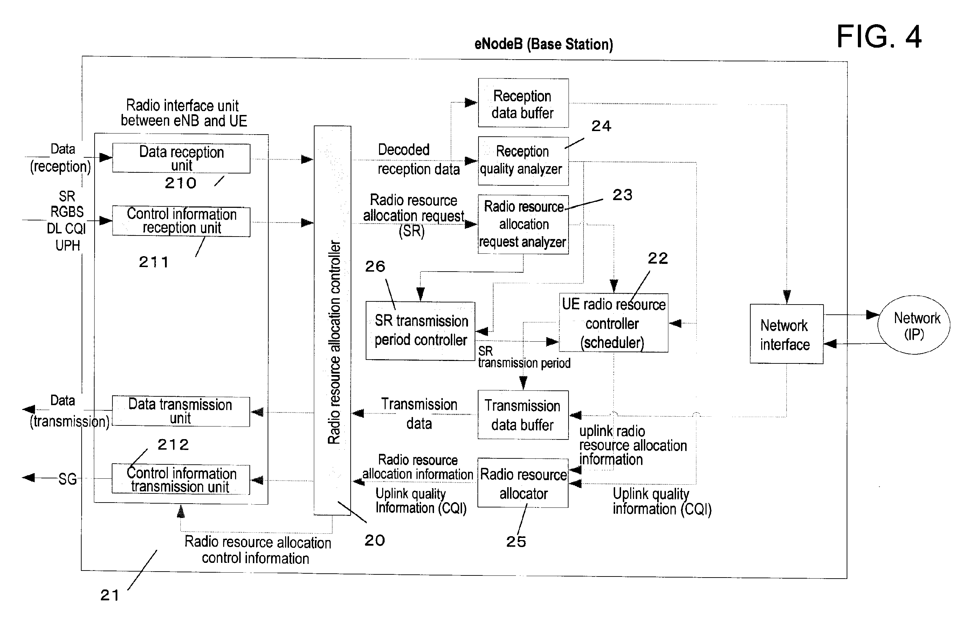

FIG. 3 is a block diagram of an exemplary configuration of a user terminal UE. Also, FIG. 4 is a block diagram of a first exemplary configuration of a base station eNB.

As shown in FIG. 1, each radio resource allocated from the base station eNB includes different frequencies on a subframe-by-subframe (1 ms) basis. Therefore, in the user terminal UE, transmission/reception frequency at a radio interface unit 11 is varied for each subframe by a radio resource allocation controller 10.

In FIG. 3, the user terminal UE receives data from the base station eNB by a data reception unit 110 of the radio interface unit 11, and also receives control information (CQI and a scheduling grant SG which is radio resource allocation information) by a control information reception unit 111. CQI (Channel Quality Indicator) represents data transfer quality from the user terminal UE to the base station eNB. The higher the CQI value is, the less error is produced in transferring data from the user terminal UE to the base station eNB, so that normal transmission is performed.

Also, since each user terminal UE allocated to each frequency is different, the base station eNB shown in FIG. 4 selects a frequency allocated to the user terminal UE of transmission/reception target by means of a UE radio resource allocation controller 20. Then, the data and the control information of the target user terminal UE are acquired by a data reception unit 210 and a control information reception unit 211, respectively.

Referring back to FIG. 3, the scheduling grant SG received by the user terminal UE is notified to radio resource allocation controller 10 and a quality information analyzer 12.

Based on the scheduling grant SG, the user terminal UE recognizes to which the radio resource (frequency and time) is allocated for next data transmission/reception by means of radio resource allocation controller 10. Based on the above recognition, the user terminal UE notifies radio interface unit 11 of correct frequency and time at the time of the next data transmission/reception, and the next data transmission/reception is performed accordingly.

Further, quality information analyzer 12 analyzes the notified CQI information, and decides the frequency and the time that the quality information relates to. Then, in regard to the previous data transmission from the user terminal UE to the base station eNB, quality information analyzer 12 analyzes the degree of quality of the data having arrived at the base station eNB. By the above analysis, the quality in the direction from the user terminal UE to the base station eNB is decided. The decided communication quality is then notified to a radio resource allocation request decision section 13.

Based on the quality information notified from quality information analyzer 12 and an accumulated data amount in the buffer notified from a transmission buffer 14, radio resource allocation request decision section 13 decides the degree of speed with which the user terminal UE has to communicate with the base station eNB for the next subframe and thereafter.

Based on the above decision, radio resource allocation request decision section 13 obtains a radio resource amount to be requested to the base station eNB, generates a scheduling request SR, so as to notify radio resource allocation controller 10 of the obtained radio resource assignment.

According to the radio resource allocation information in the scheduling grant SG received from the base station eNB, radio resource allocation controller 10 transmits transmission data in transmission buffer 14 from a data transmission unit 112. Also, as control information, radio resource allocation controller 10 transmits the scheduling request SR from a control information transmission unit 113.

On the other hand, in the base station eNB shown in FIG. 4, radio resource allocation controller 20 and a radio interface unit 21 respectively have functions similar to radio resource allocation controller 10 and radio interface unit 11 of the user terminal UE shown in FIG. 3. Because transmission/reception to/from a plurality of user terminals UE is necessary on the base station eNB side, radio resource allocation controller 20 and radio interface unit 21 decide radio resources (frequency and time) separately for each user terminal UE to be managed. After data are separated from control information on the basis of each user terminal UE, processing is made on the basis of each user terminal UE.

Further, the base station eNB includes a UE radio resource controller (scheduler) 22. UE radio resource controller (scheduler) 22 calculates radio resources to be allocated to the user terminal UE in the next subframe and thereafter, using the analysis result of the scheduling request SR received from the user terminal UE, which is obtained by a radio resource allocation request analyzer 23, and also using the reception quality decided by a reception quality analyzer 24 from the reception data.

The calculated radio resource allocation information is notified to a radio resource allocator 25. From radio resource allocator 25, the radio resource allocation information is notified to radio resource allocation controller 20, from which a scheduling grant SG is transmitted to the corresponding user terminal UE.

At this time, an uplink communication quality information (CQI) decided by the above reception quality analyzer 24 using the reception data from the user terminal UE is simultaneously transmitted from a control information transmission unit 212 to the user terminal UE

In FIG. 4, the base station eNB includes an SR transmission period controller 26 for controlling the transmission period of the scheduling request SR, that is, a radio resource allocation request from the user terminal UE. SR transmission period controller 26 controls the SR transmission period in an adaptive manner, based on both the quality information from reception quality analyzer 24 and the scheduling request SR information from radio resource allocation request analyzer 23. By notifying UE radio resource controller (scheduler) 22 of the SR transmission period, SR transmission period controller 26 controls the SR transmission period.

Next, a controlling mechanism of the above SR transmission period is described in the following.

Between the base station eNB and the user terminal UE, there is quality information being measured on the basis of each user terminal UE. Using the above information, the transmission period of the scheduling request SR is determined.

As to a user terminal UE having good communication conditions (good quality measurement information), transmission/reception with high bitrate can be made. At the same time, there is a tendency of having more frequent opportunity of radio resource allocation. Therefore, the transmission period of the scheduling request SR is shortened so that more detailed control can be made in regard to the radio resource allocation.

To the contrary, as to a user terminal UE having poor communication conditions (poor quality measurement information), the opportunity of allocating radio resources is lessened. Accordingly, control is made to elongate the transmission period of the scheduling request SR.

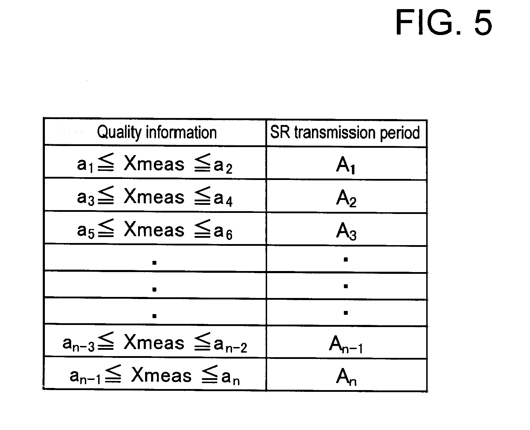

FIG. 5 is a correspondence list between the quality information and the transmission periods of the scheduling request SR. According to the above correspondence list, the base station eNB and the user terminal UE determine the SR transmission period based on the quality information at the time point of interest.

A value Xmeas shown in the above correspondence list is measured quality information, and $a_1$, $a_2$, ... $a_{n-1}$, $a_n$ are thresholds for selecting each SR transmission period corresponding to the quality information. Also, $A_1$, $A_2$, ... $A_{n-1}$, $A_n$ are SR transmission periods [ms] each corresponding to each quality information value.

The above each value varies with the type of quality information described later. In short, SR transmission period controller 26 sets a long transmission period of the scheduling request SR when the user terminal UE has poor quality, and a short transmission period of the scheduling request SR when the user terminal UE has good quality.

As to the correspondence list shown in FIG. 5, it may be possible for both the base station eNB and the user terminal UE to have fixed values from the beginning. Or, by retaining the correspondence list in the base station eNB side as parameters proper to the corresponding base station eNB, it may be possible to transmit to the user terminal UE at the time of a connection to the user terminal UE, using a radio resource control (RRC) message defined in the third generation mobile communication (3GPP). In this case, after the connection is made, it is not necessary for the base station eNB to notify the user terminal UE of the transmission period of the scheduling request SR. Instead, the transmission period of the scheduling request SR can be obtained by the reference to the correspondence list based on the quality information at each certain period (predetermined period) in a synchronized manner between the base station eNB and the user terminal UE.

Further, by retaining the above correspondence list only in the base station eNB side, it is possible to convey, to the user terminal UE, the transmission period of the scheduling request SR obtained from the correspondence list based on measured quality information, through signaling.

Here, as to the quality information for use in the above-mentioned control, there is used either one of a frequency offset estimation result, an SIR (Signal to Interference Ratio), a CQI value, BIR (Bit Error Rate), BLER (Block Error Rate) and a retransmission count in H-ARQ (Hybrid-ARQ Acknowledgement).

In the following, embodiments using the aforementioned information will be exemplified.

(1) In case of control using a frequency offset estimation result:

As a result of frequency offset estimation, the larger the frequency estimation value is, the larger phase deviation relative to the reception signal on the base station eNB side is observed by the user terminal UE concerned because of a frequency deviation between with the base station eNB. As a result, the larger the frequency estimation value is, the larger deterioration of the channel estimation accuracy is produced, causing poor communication quality.

In such case, the data transfer speed of the user terminal UE becomes lower. By this, as compared to a radio resource allocated to a user terminal UE having good communication quality, the radio resources to be allocated to the user terminal UE concerned by the base station eNB become a smaller amount. Therefore, the opportunity of issuing the scheduling request SR by the user terminal UE may be smaller.

As a result, because of poor quality in the user terminal UE having a large quality information value of the above frequency offset estimation result, the transmission period of the scheduling request SR determined by the correspondence list shown in FIG. 5 is elongated.

(2) In case of control using a SIR (Signal to Interference Ratio):

Because a user terminal UE having a smaller SIR has smaller signal power relative to interference power, the communication quality of the user terminal UE becomes poor and the data communication speed becomes low. Therefore, similar to the above case (1), the opportunity of the radio resource allocation becomes smaller. Accordingly, similar to the above case (1), the transmission period of the scheduling request SR determined by the correspondence list is elongated.

(3) In case of control using the CQI value:

Similar to the case (2), when the CQI value is small, the transmission period of the scheduling request SR is elongated.

(4) In case of control using BER:

When BER is large, because of a high bit error rate and poor quality, the transmission period of the scheduling request SR is elongated.

(5) In case of control using BLER:

When BLER is large, because of a high block error rate causing poor quality, the transmission period of the scheduling request SR is elongated.

(6) In case of control using a retransmission count in HARQ.

Because a case of a large retransmission count causes a small data transmission rate of the user terminal UE and poor quality, the transmission period of the scheduling request SR is elongated. In regard to the retransmission count, there are a method of using an average value of retransmission count values in a certain particular section, and a method of using the retransmission count value at a certain time period.

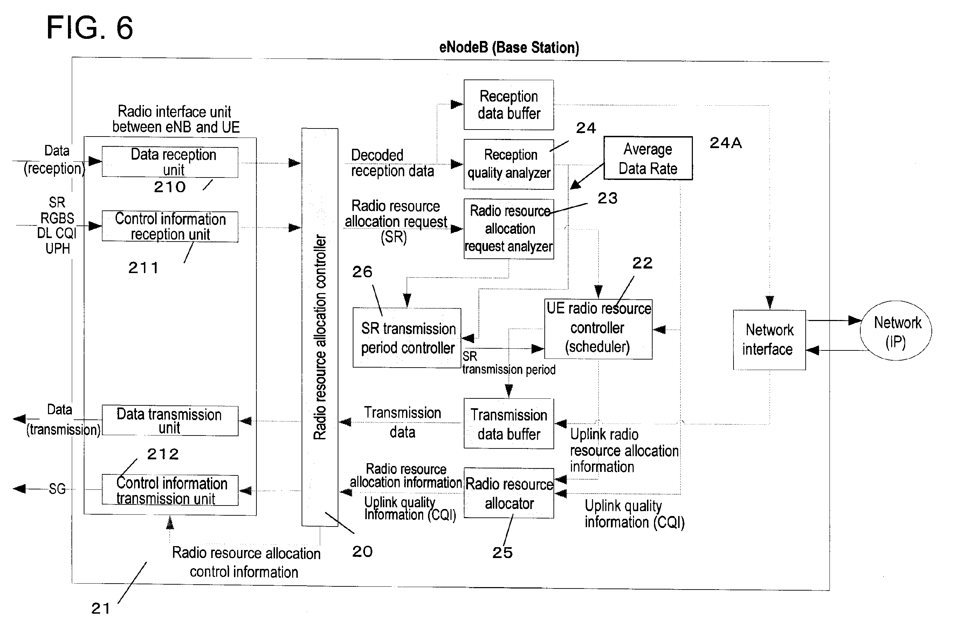

FIG. 6 is a block diagram of an exemplary configuration of the base station according to a second embodiment. This embodiment shows an example of using an average data speed (Average Data Rate) received in the user terminal UE concerned, which is measured by the base station eNB.

According to the above embodiment, an SR transmission period controller 26 is added. The average value of the received data speed (Average Data Rate) (24A) is obtained in reception quality analyzer 24, which is then input into SR transmission period controller 26. Other configurations are similar to the base station configuration shown in FIG. 4.

At the time of the SR transmission period control, an SR transmission period is determined in consideration of the average value (24A) of the received data speed, and notified to UE radio resource controller 22. By this, the transmission period of the scheduling request SR is controlled.

Here, by replacing Xmeas in the correspondence table shown in FIG. 5 with the average value (Average Data Rate) of the received data speed, the determination of the transmission period of the scheduling request SR is performed based on the average value (24A) of the received data speed, in a similar manner to the foregoing description of the first embodiment.

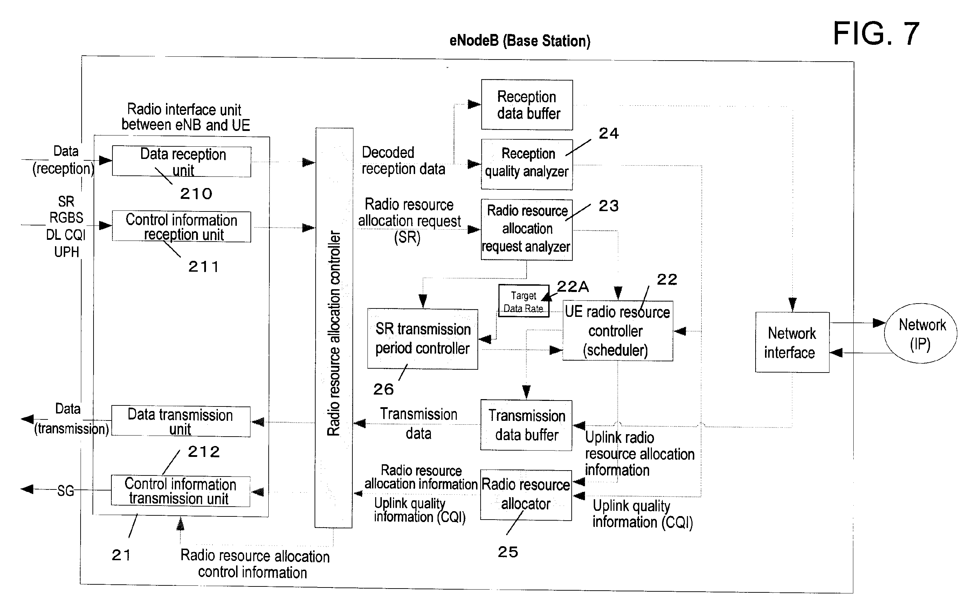

FIG. 7 is an exemplary configuration of the base station according to a third embodiment. The method in this embodiment is that the transmission period of the scheduling request SR is switched in an adaptive manner, on the basis of a "target data rate", which is an index of the data transmission speed of each user terminal UE.

A user terminal UE having a high target data rate has a high data transfer rate, and frequent radio resource allocation is required. Accordingly, the SR transmission period is shortened. A user terminal UE having a low target data rate has a low data transfer rate, and the frequency of radio resource allocation is low. Therefore, the SR transmission period is elongated, because no problem occurs if the transmission period of the scheduling request SR is elongated.

In FIG. 7, SR transmission period controller 26 is added, and by means of UE radio resource controller (scheduler) 22, a target data rate (22A) for use in the decision of radio resource amount to be allocated to the user terminal UE is input into the added SR transmission period controller 26. When deciding the SR transmission control, SR transmission period controller 26 determines the transmission period of the scheduling request SR, taking the target data rate (22A) into consideration. The determined SR transmission period is notified to UE radio resource controller (scheduler) 22.

Here, by replacing Xmeas in the correspondence table shown in FIG. 5 with the target data rate (22A), the determination of the transmission period of the scheduling request SR based on the target data rate (22A) is performed in a similar manner to the foregoing description of the first embodiment.

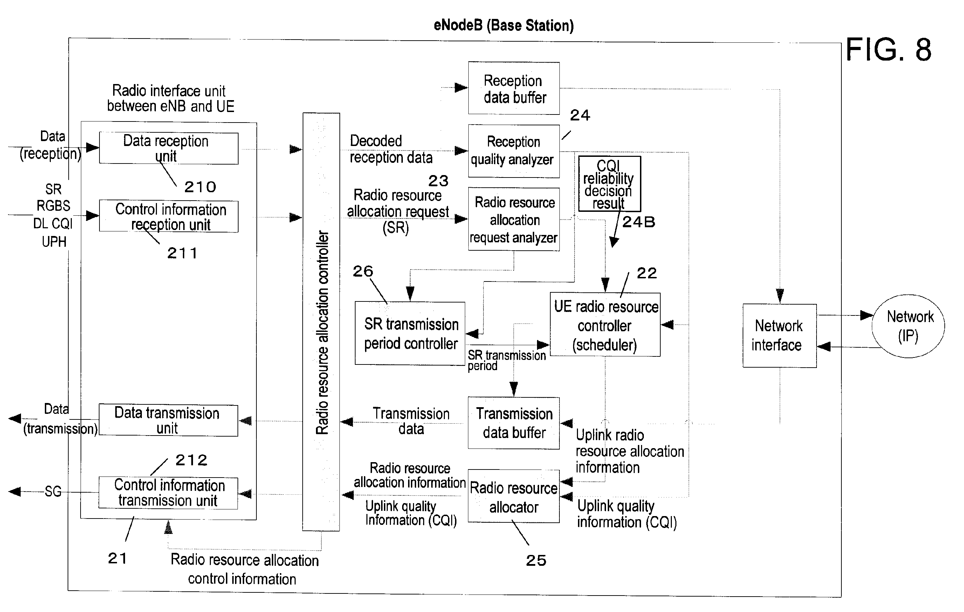

FIG. 8 is an exemplary configuration of the base station according to a fourth embodiment. The method in this embodiment is that the transmission period of the scheduling request SR is switched in an adaptive manner, on the basis of the result of reliability decision in regard to CQI received from the user terminal UE concerned. As specified by 3GPP, the reliability decision result is an index indicating the degree of reliability relative to the CQI notification from the base station in connection with SIR (Signal to Interference Ratio).

A user terminal UE having a good CQI reliability decision result has good communication quality, enabling high speed data communication. Therefore, to allocate the radio resource more frequently, the transmission period of the scheduling request SR is shortened. To the contrary, a user terminal UE having a poor CQI reliability decision result has poor communication quality. Therefore, since the data communication speed tends to be deteriorated, the transmission period of the scheduling request SR is elongated.

In FIG. 8, SR transmission period controller 26 is added, and by means of reception quality analyzer 24, a CQI reliability decision result (24B) decided from the reception data of the user terminal UE is input into the added SR transmission period controller 26. When deciding the SR transmission control, SR transmission period controller 26 determines the transmission period of the scheduling request SR, taking the CQI reliability decision result (24B) into consideration. The determined SR transmission period is notified to UE radio resource controller (scheduler) 22, and thus the control of the SR transmission period is performed.

Here, by replacing Xmeas in the correspondence table shown in FIG. 5 with the CQI reliability decision result (24B), the determination of the transmission period of the scheduling request SR based on the CQI reliability decision result (24B) is performed in a similar manner to the foregoing description of the first embodiment.

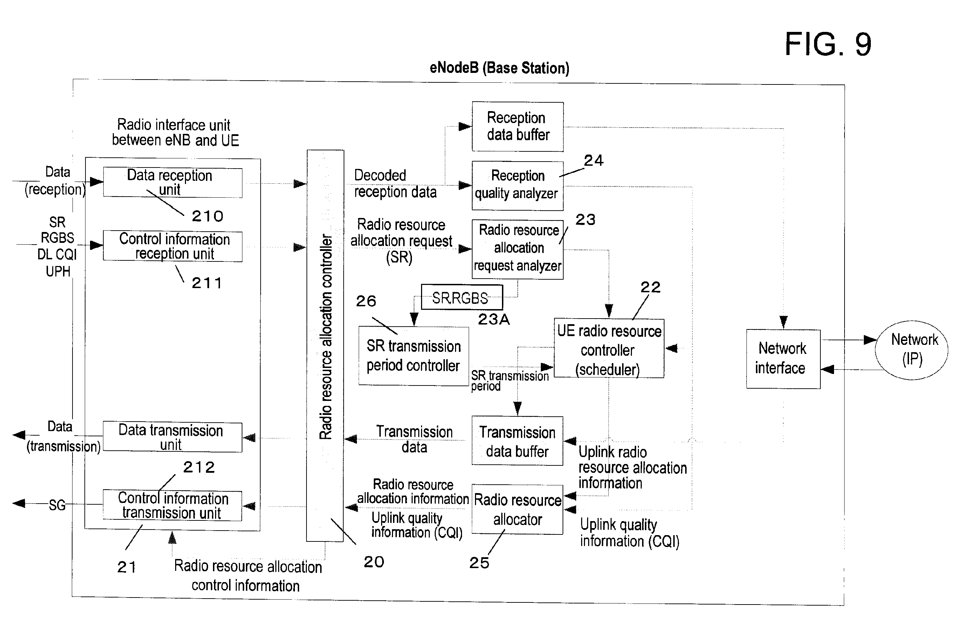

FIG. 9 is an exemplary configuration of the base station according to a fifth embodiment. The method in this embodiment is that the transmission period of the scheduling request SR is switched in an adaptive manner, on the basis of an average value of RGBS (data amount accumulated in UE transmission buffer 14) of the user terminal UE concerned.

The base station eNB side extracts average RGBS value information included in control information notified from the user terminal UE concerned. A user terminal UE having a large average RGBS value is judged to have a large data amount for transmission. Therefore, to increase the opportunity of allocating radio resources, the SR transmission period is shortened. On the other hand, to a user terminal UE having a low average RGBS value, the SR transmission period is elongated. Additionally, it is also possible to use an instantaneous value of RGBS in place of the average RGBS value.

In FIG. 9, SR transmission period controller 26 is added, and by means of radio resource allocation request analyzer 23, RGBS (23A) decided from the received control information of the user terminal UE is input into the added SR transmission period controller 26. When deciding the SR transmission control, SR transmission period controller 26 determines the transmission period of the scheduling request SR, taking RGBS (23A) into consideration. The determined SR transmission period is notified to UE radio resource controller (scheduler) 22, and thus the control of the SR transmission period is performed.

Here, the determination of the transmission period of the scheduling request SR based on RGBS (23A) is performed in a similar manner to the foregoing description of the first embodiment, by replacing Xmeas in the correspondence table shown in FIG. 5 with RGBS (23A).

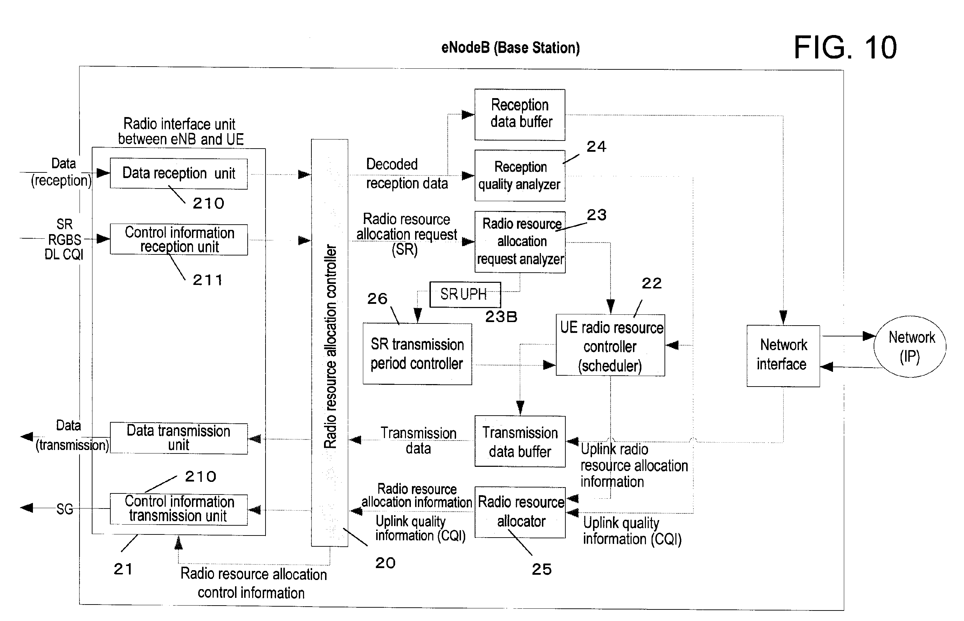

FIG. 10 is an exemplary configuration of the base station according to a sixth embodiment. The method in this embodiment is that the transmission period of the scheduling request SR is switched in an adaptive manner, on the basis of UPH [UE transmission power headroom: a ratio of the maximum transmission power of the user terminal UE to the transmission power (reference power) of a sounding RS (Reference Signal), indicating a margin for power increase in the user terminal UE] which is transmitted from the user terminal UE concerned.

A user terminal UE having a large UPH is in an environment in which communication can be made with small power relative to the maximum transmittable power, and it can be said to have good communication quality. Therefore, in such case, the environment is that data communication can be made with a higher speed. Accordingly, to allocate radio resources more frequently, the transmission period of the scheduling request SR is shortened. To the contrary, to a user terminal UE having a small UPH, the SR transmission period is elongated. As to UPH for use in the above SR transmission period control, it is possible to use either an instantaneous value at the time point of the reception from the user terminal UE, or an average UPH value.

In FIG. 10, SR transmission period controller 26 is added, and by means of radio resource allocation request analyzer 23, UPH (23B) decided from the received control information of the user terminal UE is input into the added SR transmission period controller 26. When deciding the SR transmission control, SR transmission period controller 26 determines the SR transmission period, taking UPH (23B) into consideration. Subsequently, the determined SR transmission period is notified to UE radio resource controller (scheduler) 22, and thus the control of the SR transmission period is performed.

The method of determining the transmission period of the scheduling request SR based on UPH (23B) is similar to the foregoing description of the first embodiment, by replacing Xmeas in the correspondence table shown in FIG. 5 with UPH (23B).

Here, as the correspondence table shown in FIG. 5 to realize any one of the above embodiments, an identical table is provided in both the user terminal UE and the base station eNB. By referring to the table using quality information at a certain time point, it is possible to switch the SR transmission period in synchronization between on the user terminal UE side and on the base station eNB side.

Namely, in the above each embodiment, when the transmission period of the scheduling request SR is to modify, it is necessary to modify both the SR transmission period on the user terminal UE side and the SR reception period simultaneously in a synchronized manner.

As a prerequisite to realize the above, the correspondence table defining the correspondence between the quality information exemplified in FIG. 5 and the SR transmission periods is retained in both the user terminal UE and the base station eNB. The values in the correspondence table are realized either by retaining fixed values determined in advance in both the base station eNB and the user terminal UE from the beginning (in other words, there is no case of modification during a sequence), or by transmitting the values in the correspondence table from the base station eNB to the user terminal UE by means of an RRC (Radio Resource Control) message.

In the following, an exemplary sequence to modify the SR transmission period in synchronization between the user terminal UE and the base station eNB is described.

As to the quality information transmitted and received by the base station eNB and the user terminal UE, normally, quality information on what time point is decided on a subframe-by-subframe basis. In addition thereto, a simultaneous modification of the SR transmission period is made in consideration of a transmission delay between the base station eNB and the user terminal UE.

First, the kinds of quality information that both the user terminal UE and the base station eNB can know to have an identical value are the CQI value, the retransmission count in HARQ, the average data rate, the target data rate and the RGBS value.

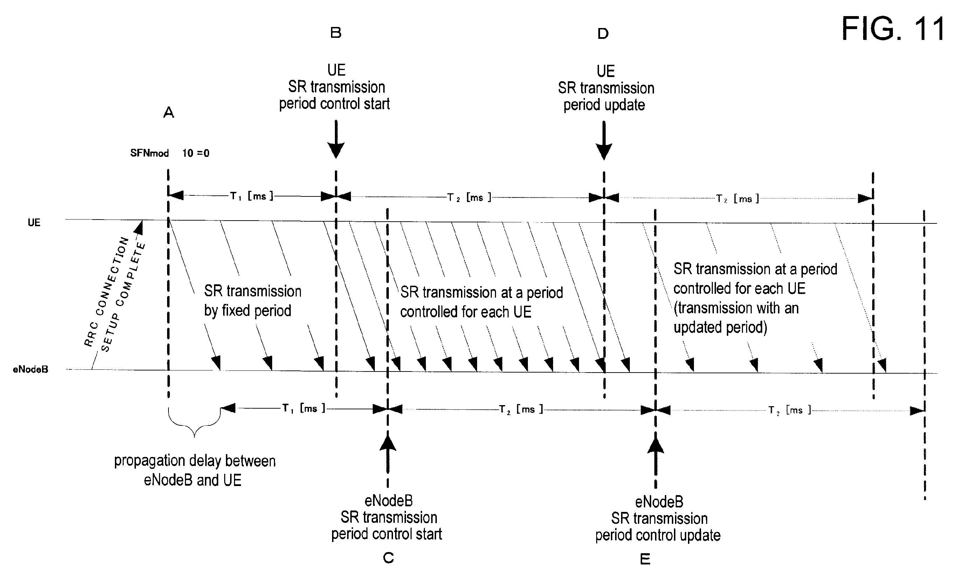

FIG. 11 shows a sequence diagram illustrating an embodiment of modifying the SR transmission period in synchronization between the base station eNB and the user terminal UE.

After the start of communication, the user terminal UE and the base station eNB monitor SFN (System Frame Number). SFN is a time that the user terminal UE and the base station eNB mutually retain in a synchronized manner. One count is 10 ms, and when the user terminal UE and the base station eNB are mutually in synchronization, an identical SFN value is counted.

After the start of communication, from a time point of SFN mod 10 = 0 (a remainder produced by dividing SFN by 10 is 0), SR transmission with a fixed period is started for a time interval of T1 [ms].

In the above time interval of T1 [ms], at the time of "RRC CONNECTION SETUP" shown in FIG. 11, parameter exchange between the user terminal UE and the base station eNB is made in advance using the RRC procedure, and the communication is started from a state known by the both sides. The above parameter is retained in the base station eNB, as system parameter, and notified to the user terminal UE by the RRC control procedure executed at the time of starting communication.

Here, the scheduling request SR is transmitted with a fixedly determined SR transmission period. In the above description, the base station eNB has a propagation delay until a data from the user terminal UE is received. In consideration of the above, to decide the time point A of SFN mod 10 =0 and the time T1 [ms], control is made on the basis of time to which the propagation delay time is added.

After the lapse of T1 [ms], based on the quality information at that time point, the correspondence table shown in FIG. 5, having been provided in common by the user terminal UE and the base station eNB through the RRC procedure, is referred to. The SR transmission period obtained by referring to the correspondence table is applied (at the time point B after T1 [ms] for the user terminal UE, and the time point C after T1 [ms] + the propagation delay time for the base station eNB). Then, the above applied SR transmission period is continued for a time T2 [ms].

After the lapse of T2 [ms], at the time points D, E, the user terminal UE and the base station eNB respectively refer to the correspondence table again, so as to update the SR transmission period and to continue for T2 [ms] again. By the repetition of the above, the adaptive control of the SR transmission period is performed in both the user terminal UE and the base station eNB.

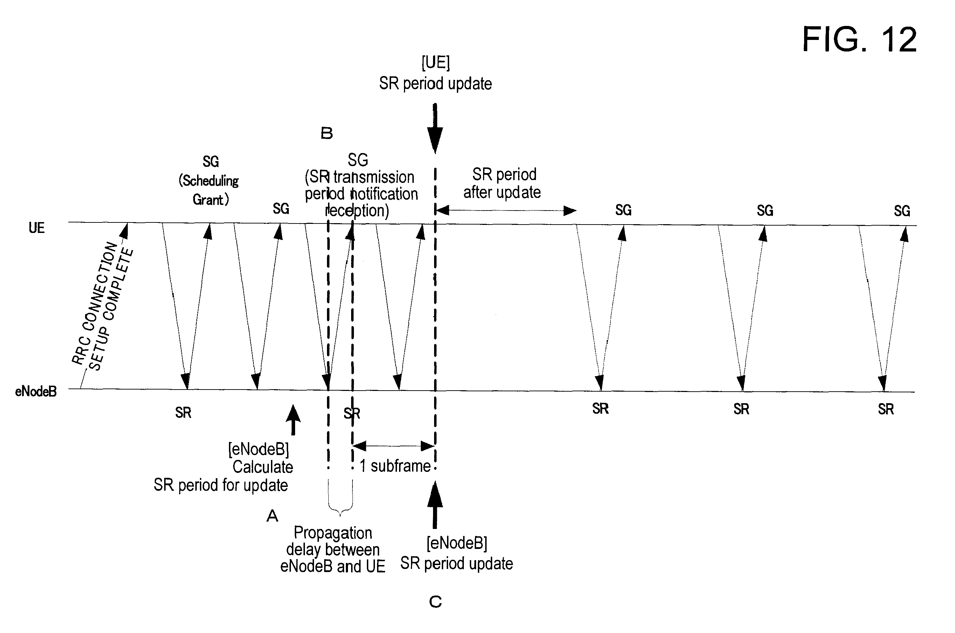

FIG. 12 is a sequence diagram illustrating an embodiment that the base station eNB and the user terminal UE switch the SR transmission period by signaling.

The judgment to switch the SR transmission period is made by that the base station eNB decides the quality information between with the user terminal UE. The user terminal UE is notified of the SR transmission period determined by the base station eNB, so as to modify the SR transmission period.

The method in the above embodiment is applicable to the entire quality information that can be known by the base station eNB in regard to the user terminal UE concerned.

To describe the sequence shown in FIG. 12, the base station eNB executes the SR transmission period control after starting data transmission/reception between with the user terminal UE. The base station eNB calculates a new SR transmission period (time point A), and then the base station eNB notifies the user terminal UE by loading the SR transmission period upon transmission control information (scheduling grant SG) which is sent from control information transmission unit 212 of the base station eNB (time point B).

The base station eNB applies the new SR transmission period after the lapse of 1 subframe (after the lapse of 1 ms) after transmitting the transmission control information having the new transmission period loaded thereon. Also, the user terminal UE applies the above new SR transmission period after the lapse of 1 subframe (after the lapse of 1 ms: time point C) after receiving the transmission control information including the new SR transmission period.

The user terminal UE and the base station eNB synchronize the modification timing of the SR transmission period by waiting for 1 subframe, respectively.

As described above, the base station eNB loads the SR transmission period information on the control information to the user terminal UE. By this, whenever the base station eNB judges that the SR transmission period is to be modified, it is possible to modify the SR transmission period in synchronization between the user terminal UE and the base station eNB.

Here, in the above description, the SR transmission period to be stored in the scheduling grant SG may be a value X [ms] of the SR transmission period itself, or index information of the SR transmission period.

When using the index information, it may be possible to fixedly determine in advance the correspondence between indexes and the SR transmission periods. Also, the base station eNB may instruct the user terminal UE by using RRC.

Further, it may be possible to switch the SR transmission period using the method described in FIGS. 11, 12, according to the coefficient calculated from a coefficient calculation expression in which the information in the above embodiments is comprehensively taken into consideration.

Namely, the coefficient calculation is made by comprehensively judging the quality information in the communication between with the user terminal UE concerned, so that the transmission period of the scheduling request SR is controlled accordingly. A reference value is set for each set of the quality information, and the coefficient is calculated using such an expression as having each quality information value related to the reference value multiplied by each weight coefficient.

The following shows an exemplary coefficient calculation expression using frequency offset estimation result, SIR (Signal to Interference Ratio) value, CQI value, BER (Bit Error Rate), BLER (Block Error Rate), retransmission count in H-ARQ (Hybrid-ARQ Acknowledgement), average data rate, target data rate, and CQI reliability decision result.

```
Ci = α1×(Fd_est/Fd_base)
    + α2×(SIRest/SIR_base)
    + α3×(CQI/CQI_base)
    + α4×(BER/BER_base)
    + α5×(BLER/BLER_base)
    + α6×(ReTransNum/ReTransNum_base)
    + α7×(Average Data Rate/Average Data Rate_base)
    + α8×(Target Data Rate/Target Data Rate_base)
    + α9×(CQI decision result/CQI decision result_base)
```

In the above expression, each notation of "_base" denotes reference value, which is a predetermined value. Also, each αn denotes a weight coefficient to reflect each set of quality information to the coefficient, which is also a predetermined value.

The above calculation may be performed subframe-by-subframe, or may be performed at a different period. Using the above obtained Ci as the coefficient of the quality information, the SR transmission period is determined by the reference to the correspondence table shown in FIG. 5.

According to the embodiment described above, the SR transmission period having been uniformly determined for each user terminal UE comes to be controlled to an optimal SR transmission period required for each user terminal UE. By this, useless SR transmission is eliminated, and a CQI information amount transmitted from the user terminal UE to the base station eNB is increased, producing improved resolution of control for securing quality.

Further, interference is reduced due to the reduction of the useless SR transmission. Thus, improvement in both the number of simultaneous connection and the communication quality between the base station eNB and the user terminal can be expected.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiment (s) of the present inventions have been described in detail, it should be understood that the various changes, substitutions, and alterations could be made hereto without departing from the scope of the claims.

**Claims**

1. In a mobile communication system, a transmission period control method for a radio resource allocation request requesting a radio resource from a user terminal to a base station, the transmission period control method comprising: in the base station,

    modifying a transmission period of the radio resource allocation request in an adaptive manner during communication based on communication quality with the user terminal; and
    notifying the user terminal of the modified transmission period of the radio resource allocation request; and

    in the user terminal,

    transmitting the radio resource allocation request requesting the radio resource to the base station at the notified transmission period.

2. The transmission period control method according to claim 1, comprising in the base station, providing a correspondence table containing the quality information and the corresponding transmission periods of the radio resource allocation request, and
by referring to the correspondence table, obtaining a transmission period of the radio resource allocation request in the user terminal corresponding to the quality information, and notifying the user terminal of the obtained transmission period.

3. The transmission period control method according to claim 2, further comprising
in the base station, transmitting the correspondence table to the user terminal at the time of connection to the user terminal; and
in the user terminal, obtaining a transmission period corresponding to the communication quality by referring to the correspondence table received from the base station at each predetermined period, and transmitting the radio resource allocation request requesting the radio resource to the base station at the obtained transmission period.

4. The transmission period control method according to claim 1, 2, or 3, wherein a parameter of the communication quality is based on an average data speed received from the user terminal concerned.

5. The transmission period control method according to claim 1, 2, or 3, , wherein a parameter of the communication quality is based on an index of a target data transmission speed of the user terminal obtained from the user terminal concerned.

6. The transmission period control method according to any preceding claim, wherein a parameter of the communication quality is based on a reliability decision result in regard to channel quality indicator (CQI) obtained from the user terminal concerned.

7. The transmission period control method according to any preceding claim, wherein a parameter of the communication quality is based on an average value of a data amount accumulated in a transmission buffer of the user terminal concerned.

8. The transmission period control method according to any preceding claim, wherein a parameter of the communication quality is based on a margin for power increase in the user terminal UE transmitted from the user terminal concerned.

9. The transmission period control method according to any preceding claim, wherein the communication quality is a summed value of values each obtained by multiplying a predetermined weight coefficient by each value of a plurality of communication quality parameters, for the plurality of sets of communication quality.

10. A base station in a mobile communication system, comprising:

a control information reception unit for receiving a radio resource allocation request requesting a radio resource from a user terminal to the base station;

a transmission period controller for controlling a radio resource allocation request from the user terminal; and

a means for analyzing communication quality of the user terminal,

wherein the transmission period controller of the radio resource allocation request is arranged to modify a transmission period of the radio resource allocation request in an adaptive manner based on the communication quality of the user terminal analyzed by the communication quality analysis means, and further includes a means for notifying the user terminal of the modified transmission period of the radio resource allocation request, as control information.

11. A mobile communication system comprising:

a base station; and

a plurality of user terminals served by the base station,

wherein each of the plurality of user terminals transmits a radio resource allocation request to the base station at a period set by the base station, and enables communication with the base station on receiving allocation of radio resource in response to the radio resource allocation request, and

based on communication quality of a said user terminal, the base station sets a period of issuing the radio resource allocation request for requesting the radio resource, and notifies the corresponding user terminal of the set period.

12. Software which, when executed by a processor of wireless transceiver equipment in a mobile communication system, causes the equipment to provide the base station according to claim 10.

13. A computer-readable medium on which is stored the software according to claim 12.

FIG. 1

Frequency band
provided
in the base station

EP 2 134 135 A2

EP 2 134 135 A2

# FIG. 2

# FIG. 3

FIG. 4

eNodeB (Base Station)

Radio interface unit
between eNB and UE

Data
(reception)

Data reception
unit

210

SR
RGBS
DL CQI
UPH

Control information
reception unit

211

Radio resource allocation controller

Decoded
reception data

Reception
data buffer

Reception
quality analyzer

24

Radio resource
allocation request
(SR)

Radio resource
allocation
request analyzer

23

26

SR transmission
period controller

22

UE radio resource
controller
(scheduler)

SR
transmission period

Network
interface

Network
(IP)

Data
(transmission)

Data transmission
unit

212

SG

Control information
transmission unit

Transmission
data

Transmission
data buffer

uplink radio
resource allocation
information

Radio resource
allocation information

Radio resource
allocator

Uplink quality
Information (CQI)

Uplink quality
information (CQI)

Radio resource allocation
control information

20

25

21

# FIG. 5

| Quality information | SR transmission period |
|---|---|
| $a_1 \leqq$ Xmeas $\leqq a_2$ | $A_1$ |
| $a_3 \leqq$ Xmeas $\leqq a_4$ | $A_2$ |
| $a_5 \leqq$ Xmeas $\leqq a_6$ | $A_3$ |
| . | . |
| . | . |
| . | . |
| $a_{n-3} \leqq$ Xmeas $\leqq a_{n-2}$ | $A_{n-1}$ |
| $a_{n-1} \leqq$ Xmeas $\leqq a_n$ | $A_n$ |

EP 2 134 135 A2

# FIG. 6

eNodeB (Base Station)

Radio interface unit between eNB and UE

Data (reception) → Data reception unit 210

SR RGBS DL CQI UPH → Control information reception unit 211

Radio resource allocation controller

Decoded reception data → Reception data buffer

Reception quality analyzer  24

Average Data Rate  24A

Radio resource allocation request (SR) → Radio resource allocation request analyzer  23

SR transmission period controller  26

UE radio resource controller (scheduler)  22

SR transmission period

Network interface → Network (IP)

Data (transmission) → Data transmission unit 212

Transmission data → Transmission data buffer

Uplink radio resource allocation information

SG → Control information transmission unit

Radio resource allocation information → Radio resource allocator  25

Uplink quality Information (CQI)

Uplink quality information (CQI)

Radio resource allocation control information  21

20

EP 2 134 135 A2

FIG. 7

eNodeB (Base Station)

Radio interface unit
between eNB and UE

Data
(reception)

Data reception
unit

210

SR
RGBS
DL CQI
UPH

Control information
reception unit

211

Decoded
reception data

Reception
data buffer

Reception
quality analyzer

24

Radio resource
allocation request
(SR)

Radio resource
allocation
request analyzer

23

Target
Data Rate

22A

UE radio resource
controller
(scheduler)

22

Radio resource allocation controller

SR transmission
period controller

26

Network
interface

Network
(IP)

Data
(transmission)

Data transmission
unit

212

Transmission
data

Transmission
data buffer

Uplink radio
resource allocation
information

SG

Control information
transmission unit

Radio resource
allocation information

Uplink quality
information (CQI)

Radio resource
allocator

25

Uplink radio
resource allocation
information

Uplink quality
information (CQI)

21

Radio resource allocation
control information

EP 2 134 135 A2

eNodeB (Base Station)

FIG. 8

Radio interface unit between eNB and UE

Data (reception)

SR
RGBS
DL CQI
UPH

Data reception unit — 210

Control information reception unit — 211

Data transmission unit — 212

Data (transmission)

Control information transmission unit — 21

SG

Radio resource allocation control information

Radio resource allocation controller

Reception data buffer

Decoded reception data

Reception quality analyzer — 24

23
Radio resource allocation request (SR)

Radio resource allocation request analyzer

CQI reliability decision result — 24B

26
SR transmission period controller

SR transmission period

UE radio resource controller (scheduler) — 22

Transmission data

Transmission data buffer

Uplink radio resource allocation information

Radio resource allocation information

Radio resource allocator — 25

Uplink quality Information (CQI)

Uplink quality information (CQI)

Network interface

Network (IP)

EP 2 134 135 A2

FIG. 9

eNodeB (Base Station)

Radio interface unit between eNB and UE

Data (reception) → Data reception unit 210

SR RGBS DL CQI UPH → Control information reception unit 211

Data reception unit / Control information reception unit → Radio resource allocation controller

Decoded reception data → Reception data buffer

Reception quality analyzer 24

Radio resource allocation request (SR) → Radio resource allocation request analyzer 23

SR RGBS 23A

26 SR transmission period controller

SR transmission period

UE radio resource controller (scheduler) 22

Network interface → Network (IP)

Data (transmission) ← Data transmission unit 212

Transmission data ← Transmission data buffer

Uplink radio resource allocation information

SG ← Control information transmission unit

Radio resource allocation information
Uplink quality information (CQI) → Radio resource allocator 25

Uplink quality information (CQI)

21 Radio resource allocation control information

Radio resource allocation controller 20

EP 2 134 135 A2

EP 2 134 135 A2

# FIG. 10

**eNodeB (Base Station)**

Radio interface unit between eNB and UE

Data (reception) → Data reception unit — 210

SR / RGBS / DL CQI → Control information reception unit — 211

Data (transmission) ← Data transmission unit — 210

SG ← Control information transmission unit — 21

Radio resource allocation control information

Radio resource allocation controller — 20

Decoded reception data → Reception data buffer

Reception quality analyzer — 24

Radio resource allocation request (SR) → Radio resource allocation request analyzer — 23

SR UPH — 23B

SR transmission period controller — 26

UE radio resource controller (scheduler) — 22

Transmission data ← Transmission data buffer

Radio resource allocation information → Radio resource allocator — 25

Uplink quality information (CQI)

Uplink radio resource allocation information

Uplink quality information (CQI)

Network interface → Network (IP)

FIG. 11

FIG. 12